Europäisches Patentamt

European Patent Office

Office européen des brevets

(19)

(11) Publication number: **0 122 795**
**B1**

# EUROPEAN PATENT SPECIFICATION

(12)

(45) Date of publication of patent specification: **21.10.87**

(21) Application number: **84302545.3**

(22) Date of filing: **13.04.84**

(51) Int. Cl.⁴: **B 01 D 45/14, F 02 M 35/02,
B 01 D 21/26**

(54) **Filter for removing particulates suspended in a fluid, e.g. gaseous medium.**

(30) Priority: **15.04.83 US 485156
15.04.83 US 485160
15.04.83 US 485552
15.04.83 US 485553**

(43) Date of publication of application:
**24.10.84 Bulletin 84/43**

(45) Publication of the grant of the patent:
**21.10.87 Bulletin 87/43**

(84) Designated Contracting States:
**DE FR GB IT SE**

(56) References cited:
**DE-C- 570 855
US-A-2 441 631**

(73) Proprietor: **THE GARRETT CORPORATION
9851-9951 Sepulveda Boulevard P.O. Box 92248
Los Angeles, California 90009 (US)**

(72) Inventor: **Woodworth, Lee R.
801 Malibu Meadows Drive Route 1
Calabasas California (US)**
Inventor: **Rowlett, Beb H.
8 Amber Sky Drive
Palos Verdes California (US)**
Inventor: **Nagyszalanczy, Lorant
15004 Greenleaf Street
Sherman Oaks California (US)**

(74) Representative: **Arthur, George Fitzgerald et al
KILBURN & STRODE 30, John Street
London WC1N 2DD (GB)**

EP 0 122 795 B1

Courier Press, Leamington Spa, England.

## Description

This invention relates to filters for removing particles suspended in a gaseous or liquid medium which will be referred to generally herein as fluid.

Filters for removing very small particulates from gaseous suspension are fairly well known in the art today.

Devices for filtering particles from an air stream are of five basic types: viscous impingement filters, electrostatic precipitators, dry interception or barrier filters, cyclone or vortex inertial separators, and a combination of an inertial separator and a barrier filter.

Viscous impingement filters are useless in removing smaller particles, since smaller particles tend to follow the path of the airstream through the filter, and thus are not removed from the airstream.

Electrostatic precipitators possess many disadvantages, including their large size and awkward shape, severe limitations on the air flow which can be passed through a precipitator sized to be carried on a vehicle, the requirement of very high voltage power supplies, fairly high unit cost, and the necessity for frequent cleaning of the filter.

In a barrier filter, two opposing considerations are present; first, it is desirable to make the filter highly efficient (close weave) in order to remove smaller particles in the airstream; on the other hand, the barrier filter must be made somewhat less efficient (wide weave) in order to prevent it from becoming clogged too quickly. These opposing considerations are irreconcilable in an airstream containing a variety of sizes of particles from which both large and small particles must be removed.

A cyclone or vortex inertial separator operates on the principle that particles suspended in an airstream have greater inertia than the gas itself.

Cyclone or vortex inertial separators are not good for removing small particles from an airstream, and they are generally large and heavy.

A combination of an inertial separator and a barrier filter presents the disadvantages of both without the advantages of either.

Therefore, it can be seen that there are no existing filter or separator arrangements in the art which are capable of removing small particulate matter suspended in a gaseous medium and which are also capable of removing larger particles from the gaseous medium and are available for use over extended periods of time without requiring shutdown to replace or clean filters. There exists today an urgent need for such a filter arrangement, particularly in several vehicular applications.

Another application is for a filter capable of removing very small as well as larger particles from the air is in the cabin ventilation system of a sealed military vehicle.

Another application is in the exhaust system of a motor vehicle. Two particular environmental problems today are diesel soot from the exhaust of diesel engine vehicles, and lead particles from gasoline engines burning leaded gasoline.

A conventional filter system would be useless in removing such particulates, since the filtering device must not only be relatively small to be conveniently installed on the vehicle, but must be highly resistant to clogging over extended periods of time.

An object of the invention is to provide a filter device which is capable of removing particulate matter ranging in size from sand particles to very tiny dust particles as small as approximately 2 μm from an airstream. It is desirable that such a device be utilizable as an engine intake air cleaner, removing particulate matter from the airstream supplied to a vehicle operating in a dirty, dusty, or sandy environment. Such a device may also be usable for removing very fine dust particles from the environmental air intake supply air to the crew of a vehicle; extremely small dust particles must be removed in certain application since such dust particles are primary carriers of radiation contamination. Such a filter device may also be capable of removing lead or carbon particles from the exhaust gas stream from a vehicular engine, lasting for extended periods of time without maintenance.

Further desirable requirements of such a filter device are that it be self-cleaning, that it need no replacement or cleaning of a filter element, and that it need only minimal maintenance and repair service over extended periods of use in hostile environments, for example a desert environment or the exhaust stream of an internal combustion engine.

Since such a filter device may either be used in an application in which there may be a gas pressure drop across it (such as in the intake system or in the exhaust system of an engine) or in an application where there is no inherent gas pressure drop across the device (such as in a environmental ventilation system supplying air to a sealed cabin) it is desirable that if the filter device requires to be driven, it should either be mechanically powered or it should be capable of being driven by the pressure drop across the device. If powered the filter device should be driven by a small, efficient motor, such as a self-contained electric motor. The filter device if pressurised may be driven by the pressure drop, and therefore should contain some type of fluid-powered driving means such as the turbine wheel in a turbocharger. The filter device should preferably also be of minimal size, weight, and cost, since it may be utilised on vehicles as small as a commercially available passenger car. It should preferably also be a bolt-on device, in which case it is necessary that the filter device be entirely self-contained.

In the removal of the particles from the gasflow, it is highly desirable that as little of the gasflow as possible be used for purging the particles from the device, to make the device as efficient as possible.

A final desirable feature of such a filter device is that it inhibits the breakup of particles into smaller particles caused by the dynamic operation of the device. In order to do this, the particles contained in the gasflow should be removed from the device as quickly as possible, and any secondary gas-flows within the device must be minimised or eliminated to prevent particles from bouncing around and breaking up within the device.

According to the invention, therefore, a rotary filter device is provided in which a stream of gaseous or liquid medium to be filtered, hereinafter referred to as fluid, for example, an air stream, is caused to flow within a housing containing a rotor which is driven at a high rotational speed to cause the fluid stream to swirl around the rotor in the housing. The swirl thus generated causes small and large particles carried in suspension in the fluid stream to migrate centrifugally towards a region near the circumferential wall of the housing, from which region the migrated particles may be removed, for example through one or more apertures in the housing wall.

Porous shroud means surrounds, and is carried by, the rotor in close proximity to the housing wall, for minimising secondary flow swirl in the annular space between the rotor and the housing without preventing migration of the particles to an excessive extent.

The invention provides a rotary filter device of a unique design which renders the device capable of separating both large and very small particles from a gas stream passing through the device. The device in its preferred embodiments is fully capable of removing particulate matter ranging in size from grains of sands all the way down to particles only 2 μm in diameter, over 99% of the latter particles being removed from an airstream. In one embodiment of the rotary filter device, the outlet volume gas flow from the device permitted is over 2,000 times the volume of the device itself; the impact of this figure is that the gas volume required for any particular application may be achieved using a device much smaller than barrier filters, cyclone or vortex inertial separators, or any combination thereof, and in addition the device may achieve an efficiency of a magnitude of one or two times greater than was possible using such previously known devices.

The rotary filter device may be constructed in one or two basic arrangements either powered by some type of drive means, or turbo-driven by a pressure drop access the device such as would be found if the device was used as an intake or exhaust filter for an engine. The powered version may be driven by an electric motor contained in the filter device itself, or by driving a shaft extending from one end of the device.

Even with such outstanding performance characteristics, the rotary filter device boasts an exceedingly simple construction, since it is basically a rotor contained within a housing. The rotor itself is preferably cylindrical in shape, and may be provided with inducer blades at the inlet end of the rotor and exducer blades at the outlet end of the rotor, both of which cause the fluid to flow through the device and over the rotor. The porous shroud which covers the driving blades on the rotor tends to overcome secondary fluid swirl between adjacent driving blades.

The porous shroud tends to prevent particulate breakup and secondary flow of particles causing such particulate breakup, thus further increasing the efficiency in the removal of all particular matter down to approximately 2 μm diameter.

The invention may be carried into practice in various ways, but certain specific embodiments thereof will be described by way of example only and with reference to the accompanying drawings, in which:

FIGURE 1 is an axial section showing the invention in a powered embodiment driven by a shaft, and featuring radial outflow inducer geometry and a rotor with axially extending driving blades

FIGURE 2 is a side view of the rotor of the device shown in Figure 1;

FIGURE 3 is the inducer end view of the rotor shown in Figures 1 and 2;

FIGURE 4 is an axial section through a turbo-driven embodiment of the present invention with axial inducer geometry;

FIGURE 5 is a side view of the rotor of the device shown in Figure 4;

FIGURE 6 is the inducer end view of the rotor shown in Figures 4 and 5;

FIGURE 7 shows in axial half-section a modification of the Figure 1 embodiment with mixed inflow inducer geometry, and an increasing diameter axial driving blade design;

FIGURE 8 is a partial cross-sectional view of the device of Figure 1, Figure 4, or Figure 7 showing the tangential discard removing channel design;

FIGURE 9 is a view similar to Figure 8 but showing a scroll-type discard removing channel;

FIGURE 10 is a view similar to Figure 8 but showing the tangential discard removing channels of Figure 8 with a diffuser;

FIGURE 11 is a cross-sectional view of the device of Figure 9, but showing as a modification multiple scroll-type egress points for a single discard removing channel;

FIGURE 12 is a schematic cross-sectional view of two axially extending driving blades illustrating the secondary flow characteristics which may impede performance of the device;

FIGURE 13 is a side view of an alternative embodiment for a rotor to be used in the device shown in Figure 1, the rotor having a porous shroud to eliminate the secondary flow problem shown in Figure 12; and

FIGURE 13A, is an enlarged view of a portion of the porous shroud shown on the rotor in Figure 13.

In each of the illustrated embodiments, the filter device will be specifically described in its application to filtering particles from an air stream, although as already mentioned the device may be used to filter other gaseous media, such as i.e. engine exhaust gases, or even for liquid filtration.

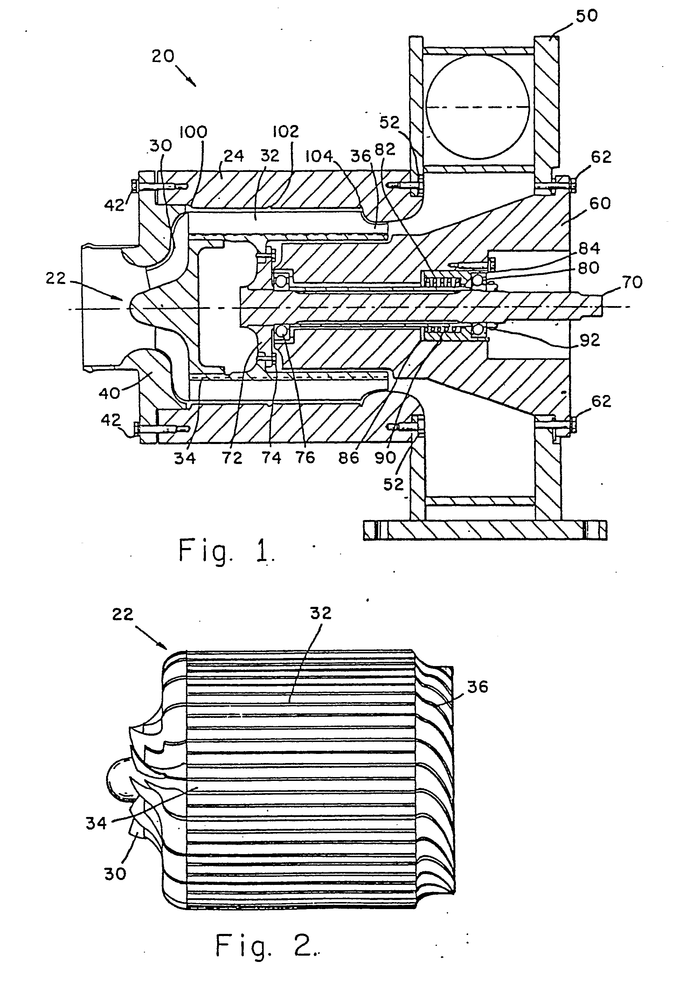

A shaft driven rotary filter device 20 embodying the principles of the present invention is shown in Figure 1. The two principal components of the filter device 20 are a rotor 22 and a housing 24.

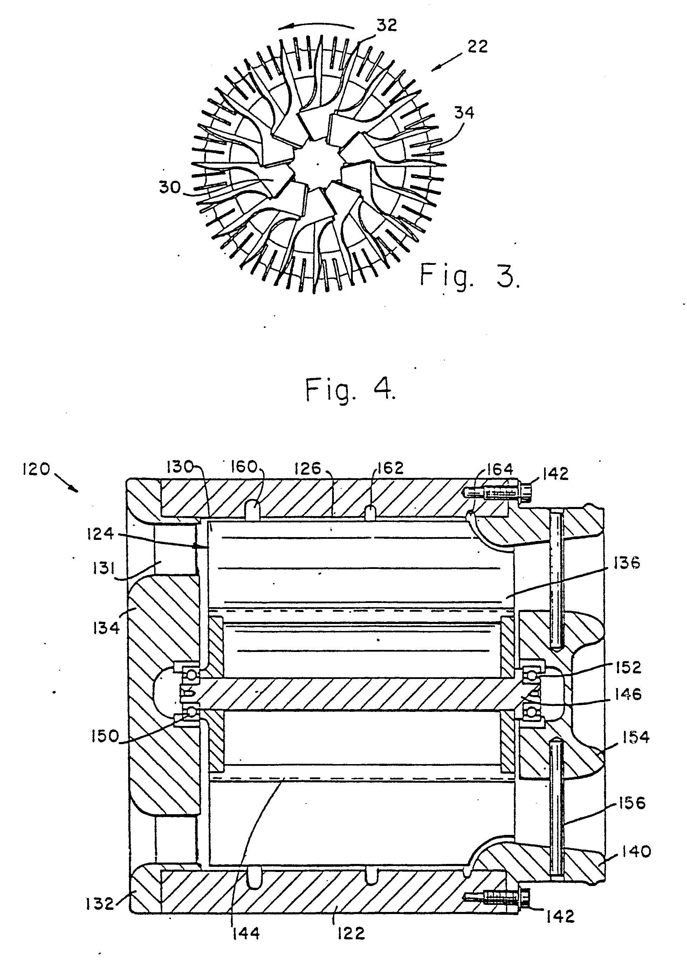

The rotor 22 best shown in Figures 2 and 3, is basically cylindrical and is designed to rotate about the axis of the cylinder. The rotor 22 may be subdivided into three portions; an inlet portion, a separator portion, and an outlet portion.

The inlet portion consists of a number of inducer blades 30, shown mounted at the left end of the body 34 of the rotor 22 as seen in Figures 1 and 2, and shown in the end view of Figure 3. The inducer blades 30 act to draw the airstream to be cleaned into the filter device 20.

The inducer blades 30 shown in Figures 1, 2, and 3 are arranged in a radial outflow configuration. What this means is that the airflow is drawn into the filter device 20 near the centre of the rotor 22, and then flows radially outward through the paths defined by the inducer blades 30 to reach the separator portion of the rotor 22, as best shown in Figure 1. Two other possible configurations for the inlet portion of the rotor 22 will be discussed later.

The separator portion of the rotor 22 consists in the primary embodiment of a number of axially extending rotor blades 32 projecting radially outwardly from a cylindrical rotor body portion 34. These blades 32 are referred to as the driving blades. The airstream within the filter device 20 will travel essentially between the driving blades 32 longitudinally from left to right in FIGURES 1 and 2. Since during the time that the airstream is flowing from the inlet end of the rotor 22 toward the outlet end of the rotor 22 between the driving blades 32, the rotor 22 is rotating at a fairly high speed, particles present in the airstream will be driven in a direction radially outward from the rotor 22, since their relative weight is greater than that of the gaseous airstream.

The outlet portion of the rotor 22 consists of a number of exducer blades 36 mounted on the right hand end of the body 34, which will remove a large part of the rotational energy imparted to the airstream by the inducer blades 30 and the driving blades 32. It may be noted that while the figures show specific numbers of inducer blades 30, driving blades 32 and exducer blades 36, this should in no way imply that the present invention is limited to the specific blade configurations shown which are only specific examples.

The second basic component of the rotary filter device 20 is the housing 24, which serves two basic purposes; first, to rotatably support the rotor 22 via additional necessary hardware, and second, to closely surround the inducer blades 30, the driving blades 32, and the exducer blades 36 of the rotor 20, and to define any annular-section space between the rotor body 34 and the housing wall in which space the blades of the rotor lie. By closely surrounding all three bladed portions of the rotor 22, the housing essentially confines movement of the air stream through the filter device 20 to the areas within the bladed portions of the rotor 22. In addition to the main housing portion 24 which surrounds the driving blades 32 and the exducer blades 36, an inlet shroud 40 surrounds the inducer blades 30, ensuring that the airstream travels primarily between the inducer blades 30 when flowing through the filter device 20. The inlet shroud 40 is bolted to the main housing 24 by a number of bolts 42 around the perimeter of the inlet shroud 40.

Upon leaving the rotor 22 through the exducer blades 36, the airstream may still have some rotational energy not removed by the exducer blades 36, and will be channelled out of the filter device 20 through a scroll assembly 50 which is bolted onto the main housing portion 24 by a number of bolts 52. The scroll assembly, which in the embodiment shown in Figure 1 is of a diameter larger than the diameter of the rotor 22 and the main housing 24, has a single tangential outlet for the airstream passing through the filter device 20. As will be apparent in discussion of additional figures accompanying this specification, the configuration of the scroll assembly 50 is only one of a number of possible configurations by which the airstream may exit the filter device 20, and, in fact, is more useful in a stationary location application than in a vehicular application, the latter of which is the primary concern herein.

The rotor 22 is rotatably mounted on a shaft carrier housing 60, which, in turn, is mounted to the scroll assembly 50 by a number of bolts 62 extending circumferentially around the shaft carrier housing 60. Thus, it may be seen that the shaft carrier housing 60 extends into the filter device 20 from the outlet end adjacent the scroll assembly 50 and actually is within a portion of the cylindrical rotor body 34.

A shaft 70 extending through the shaft carrier housing 60 into the interior of the cylindrical rotor body 34 is press-fitted onto a shaft carrier flange 72, which, in turn, is bolted onto the cylindrical rotor body 34 by a number of bolts 74 extending circumferentially around the shaft carrier flange 72. A bearing assembly 76 is mounted into the end of the shaft carrier housing 60 adjacent the shaft carrier flange 72, and rotatably supports the end of the shaft 70 attached to the rotor 22.

The driving end of the shaft 70 which extends out of the outlet end of the filter device 20 is supported by a second bearing assembly 80, which is mounted within a bearing preload sleeve 82 slidably mounted in the outlet end of the shaft carrier housing 60, and retained within the shaft carrier housing 60 by a retaining bolt 84. Mounted within the bearing preload sleeve 82 and acting on the shaft carrier housing 60 through a number of shims 86 is a spring 90, which tends to urge the rotor 22 onto the shaft carrier housing 60. Tension in the spring 90 is adjusted by a retaining nut 92 mounted on the shaft 70 and causing the bearing preload sleeve 82 to be adjusted within the shaft carrier housing 60. Thus when the shaft 70 is driven, the rotor 22 is caused to rotate within the filter device 20. Of course, the mounting arrangement used in Figure 1 to rotatably mount the rotor 22 within the filter device 20 is only one arrangement which has been found to be acceptable, and other arrangements are possible.

Operation of the Device

When the shaft 70 is driven causing the rotor 22 to rotate at high speed, the inducer blades 30 will draw the contaminated airstream into the filter device 20. The airstream will move from the inducer blades 30 to the driving blades 32, which are moving at high speed relative to the main housing 24 adjacent the edges of the driving blades 32. The airstream between the driving blades 32 contains particles which will tend to be thrown outward due to the centrifugal force caused by the high speed rotation of the rotor 22. Therefore it can be seen that most of the particular matter in the airstream will be swirling near the main housing 24, at which location it can be removed from the filter device 20.

Three discard removing channels 100, 102, and 104 are located in the main housing 24. These discard removing channels 100, 102, and 104 are basically grooves which are machined into the main housing 24, and which therefore are of a slightly greater diameter than the rest of the portion of the main housing 24 adjacent the driving blades 32. Since the diameter of each of the discard removing channels 100, 102, and 104 is greater than that of any other portion of the main housing 24 adjacent the driving blades 32, particulate matter, which is heavier than the gaseous medium in which it is suspended, will tend to be thrown outward into these discard removing channels 100, 102, 104 and will circulate therein.

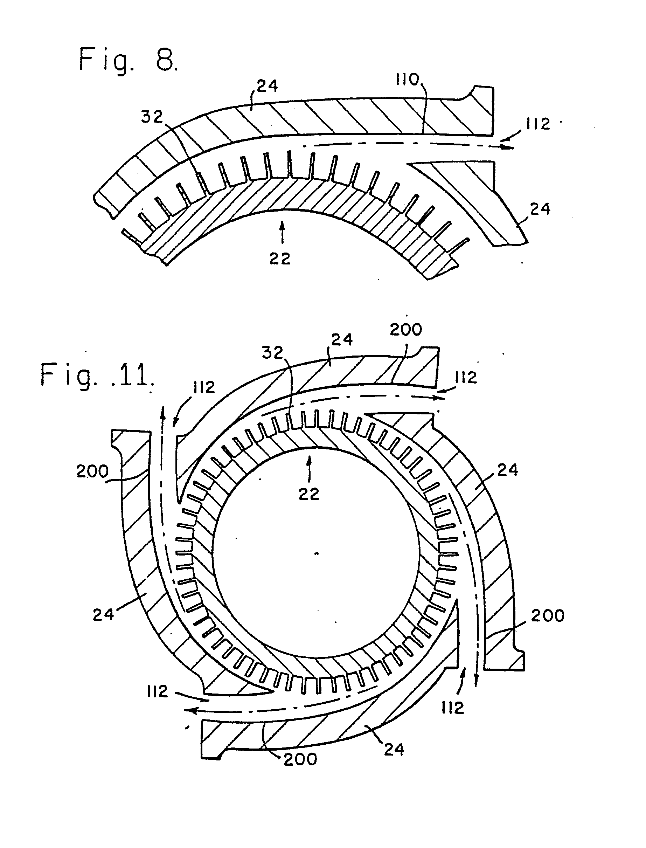

At some portion in the circumference of the main housing 24 and each of the discard removing channels 100, 102, and 104, the particulate matter circulating in the discard channels 100, 102, and 104 will be removed from the filter device 20. One possible arrangement for this particulate removal is shown in Figure 8, which is a partial cross-sectional view of one of the discard removing channels 100, 102, and 104. The particular discard removing channel shown in Figure 8 is a tangential discard channel 110 so named because particulate matter exiting the filter device 20 through the tangential discard channel 110 leaves in a scavenging outflow 112 tangential to the path of the driving blades 32. Since the actual size of the tangential discard channel 110 is fairly small, only a small amount of gas from the airstream is required to carry the particulate matter through the tangential discard channel 110 out of the filter device 20. This aspect of the invention and other possible configurations for the discard removing channels 100, 102, and 104 will be discussed later. Also, it should be noted that the discard removing channels may be machined to extend axially in the interior of the housing, with small holes in the axial channels allowing the particles to exit the device.

Returning to Figure 1, it can be seen that the discard removing channel 100 is larger and deeper than the discard removing channels 102 and 104.

The reason for this is that the larger particles will be removed at the first discard removing channel 100, since they will immediately move to the outside of the flow path between the driving blades 32 and the main housing 24. In fact virtually all particles above a 10 micron diameter will be removed at the first discard removing channel 100. The smaller particles will be removed mainly at the second and third discard removing channels 102 and 104.

In order to remove virtually all particles down to a size of 1 to 2 microns, a sufficient amount of centrifugal force must be applied to particles suspended in the airstream. It will be immediately recognised that the centrifugal force is dependent upon the speed and the diameter of the rotor 22. Even with the rotor diameters of less than 304.8 mm (one foot) the filter device may be constructed using present high speed technology so that it will achieve the desired efficiency. Therefore, it can be seen that the filter device 20 is considerably more compact than cyclone or vortex type inertial separators.

Referring now to Figure 4, a filter device 120 is shown which operates on the pressure drop between the inlet end and the outlet end of the filter device 120. A housing 122 surrounds a rotor 124 in a manner very similar to the principles explained above with reference to the filter device shown in Figure 1. The rotor 124 has a number of driving blades 126 each of which has an axial flow inducer blades portion 130 at one end. By axial flow it is meant that the airstream enters the device basically in a straight line rather than entering near the centre of the rotor and moving radially outward to reach the blades; as it did in the device of Figure 1. Alternate driving blades 126 have oblique exducer blade portions 136 extending at their other ends.

For the filter device 120 shown in Figure 4, the air stream enters through inlet vanes 131 mounted between an inlet shroud 132 which is attached to the main housing 122, and a shaft carrier assembly 134. The airstream will flow through the inducer blade portion 130 and between the drive blades 126, will exit the rotor 124 through the exducer blade portion 136, and will leave the filter device 120 through an outlet shroud 140 which is bolted onto the housing 122 by a number of bolts 142 extending circumferentially around the perimeter of the outlet shroud 140.

The rotor 124 consists of the driving blades 126 which are mounted on a rotor shaft 144, which is in turn mounted onto a shaft 146. The inlet end of the rotor 124 and the shaft 146 are supported by a bearing assembly 150, which is mounted in the shaft carrier assembly 134. The outlet end of the rotor 124 and the shaft 146 are rotatably mounted in a second bearing assembly 152, which is supported by a support assembly portion 154 connected by a number of shaft carrier bars 156 to the outlet shroud 140. Thus, it can be seen that the rotor 124 will turn freely within the housing 122.

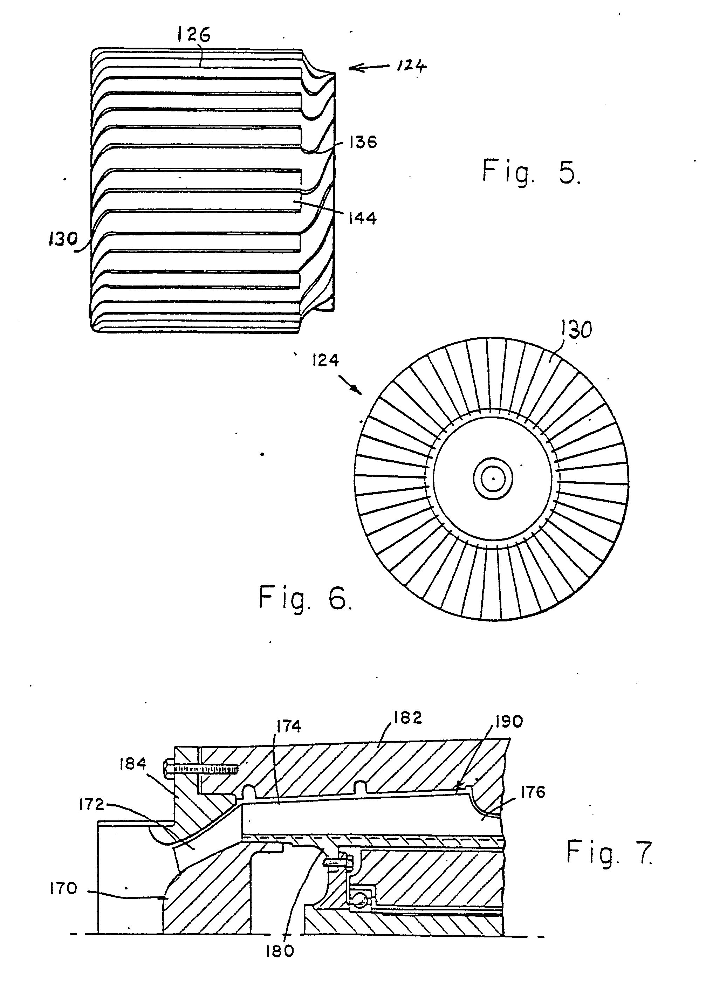

Figures 5 and 6 show the rotor 124, which is particularly designed to operate with a pressure drop of approximately 254 mm (10 inches) $H_2O$ while removing virtually all particles down to a size of between 1 and 2 microns. This performance is achieved in a package with an overall diameter of approximately 228.6 mm (nine inches). The filter device 120 may thus be operated in the intake system or exhaust system of an I.C. engine, and will be operated by the vacuum of the intake or pressure of the exhaust. Particles removed by the filter device 120 exit the device through three discard removing channels 160, 162, and 164 operating as described above channel 162 being smaller than channel 160, and channel 164 being smaller than channel 162.

The rotary filter device 20 shown in Figure 1 utilises radial outflow geometry and the filter device 120 shown in Figure 4 utilises axial flow geometry. A third type of inducer flow geometry is mixed flow geometry which is used in the embodiment shown in Figure 7, and is a compromise between radial outflow geometry and axial flow geometry. A rotor 170 is shown in Figure 7, comprising mixed flow inducer blades 172, driving blades 174, and exducer blades 176 mounted on a rotary body 180. The rotor 170 is rotatably mounted within a housing 182, and is supplied with an air stream through an inlet shroud 184. The mixed flow inducer geometry may be used in a variety of applications, including in an environment containing only a small amount of larger particles, and is more aerodynamically efficient than other configurations, thus resulting in reduced power consumption. The radial outflow inducer design may be useful in environments containing increased quantities of larger particles, and the axial flow design may be useful in environments containing only minimal amounts of larger particles. The logic behind selection of the appropriate inducer design being dictated by the environment in which the filter device is to operate is apparent when it is noted that the larger particles may be particularly destructive of the driving blades, and therefore it is highly desirable to remove the larger particles at the first discard removing channel location, rather than allowing them to travel along the driving blade path. As in Figure 4, the three discard channel grooves are successively smaller in depth, diameter and cross section, in the axial flow direction of the housing of Figure 7.

Another optional design modification of the Figure 1 construction in Figure 7 is the increasing diameter rotor driving blade design illustrated at 190. An increase in the diameter of each driving blade 174 along its length may prevent particles from remaining in a swirl pattern between discard removing channels. By progressively slightly increasing the diameter of the driving blades 174 along their lengths in the direction away from the inducer blades 172, and shaping the housing 182 to increase its internal diameter slightly and progressively in the direction away from its inlet end 184 so as to follow the contour of the driving blades 174, it may be ensured that particles which might otherwise swirl between two axially- spaced circumferential discard removing channels will tend to tumble along to the next discard removing channel, at which point the particles will be removed. The benefits of such a design are reduced wear on the driving blades 174, and the housing 182, and a reduction in the amount of particle breakup caused by particles continuing to remain in the driving blade 174 area without being removed from the device.

Discard Removing Channel Alternate Configurations

The tangential discard channel 110 which has been discussed above is the simplest type of discard removing channel. It consists of a concentric circumferential groove in the housing 24 with one or more passages through the housing 24, each at a tangent to the groove. The groove and single passage shown in Figure 8 form the tangential discard channel 110, and particles circulating between the driving blades 32 and the housing 24 will be impelled through the tangential discard channel 110, these particles and the small amount of scavenging air accompanying them comprising the scavenging outflow 112.

Thus, it can be seen from Figures 1 and 8 that only three small outlet passages provide the means through which particulate matter separated from the airstream is removed from the filter device 20. Thus, only a very small amount of scavenging air flow is removed from the airstream to carry the particulates out of the filter device 20. More primitive rotary filter devices required a fairly large amount of scavenging air to carry the particulates out of the device, the amount of scavenging air being approximately 20 to 25% of the volume of the airstream flowing through the device. Such heavy losses would preclude the successful operation of a filter device driven by a pressure drop, such as the filter device 120 shown in Figure 4.

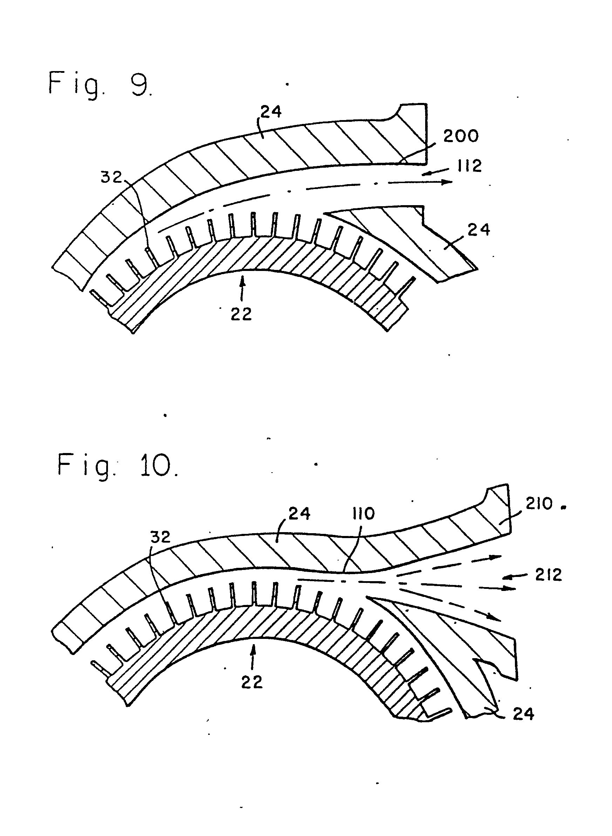

The design of the discard removing channel shown in Figure 8 and its modified forms shown in Figures 9, 10, and 11, any of which can be utilised in the embodiments of Figures 1, 7, 13 and 14, thus represent substantial improvements over existing designs and would use only a small percentage of the volume of airstream as scavenging air, thus greatly reducing airflow losses.

In Figure 9, a scroll-shaped discard channel 200 is illustrated. The scroll-shaped discard channel 200 is similar to the tangential discard channel 110, but the grooved portion in the housing increases in depth as it approaches the location of the passage through which the scavenging outflow 112 leaves the filter device. This configuration may be more efficient in removing particles from the grooved portion to the outlet passage portion of the channel 200. Thus, the main housing 24 more closely adjoins the driving blade 32 at locations away from the outlet portion of the scroll-shaped discard channel 200.

In Figure 10, a tangential discard channel 110 is illustrated with a diffuser 210, which acts to remove the energy from the scavenging air and particles exiting the filter device as the diffuser scavenging outflow 212. This feature permits the discard operation to occur even if the static pressure within the device 20 is less than the static pressure of the environment to which the particles are removed, since the dynamic pressure maintained by the high airflow velocity within the device 20 is converted to static pressure by the diffuser 210, thus raising the static pressure of the outflow 212 as it exits the device 20 through the diffuser 210. Also, maintaining a lower static pressure within the device 20, which is made possible by the use of the diffuser 210, means that the device 20 will require less power to drive it.

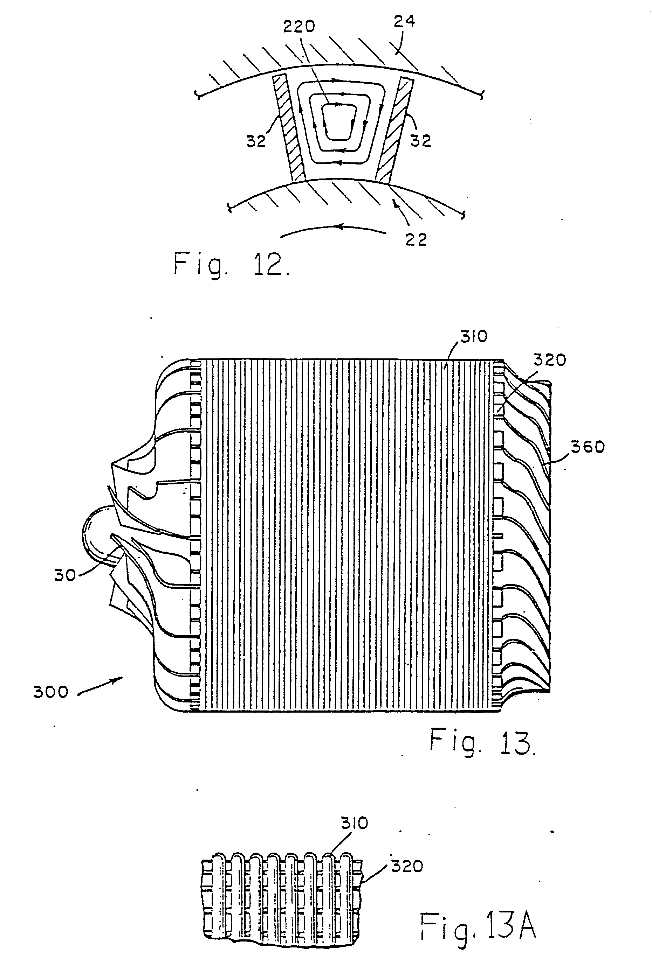

Figure 11 illustrates another modification in which there are four scroll-shape discard channels 200 located in the main housing 24 of the rotary filter device 20. Such an application would probably be useful only with extremely high air fold volumes, since the losses would be increase fourfold.

## The Secondary Flow Velocity Problem

The high speed rotation of the airstream through the filter device 20 between the driving blades 32 and the housing 24 may cause unwanted secondary flow velocities of two types, namely inertial type secondary flow, and frictional or viscous type secondary flow. Of these types, frictional or viscous type secondary flow is the more serious, and is illustrated in Figure 12. The rotor 22 is rotating at high speed in the direction shown relative to the main housing 24, and this high speed rotation will cause a swirling in the area indicated as the secondary flow swirl 220. While the heavier particles will resist the secondary flow swirl 220 and be forced radially outward towards the main housing 24 where they can be removed by the discard removing channels 100, 102 and 104, (Figure 1), the smaller and lighter particles suspended in the airstream may become entrained in the secondary flow swirl 220 thus effectively preventing their removal from the filter device 20. In addition, this swirling will cause the particles entrained therein to move violently within the area defined by the driving blades 32, and the main housing 24, thus possibly causing particle breakup, further hindering the removal of the particles. The present invention provides a solution to the problem of secondary flow velocities.

## The Shrouded Rotor Solution

A solution to the secondary flow velocity problem described above is to cover the driving-bladed portion of a rotor 300 similar to the rotor 22 of any of Figures 1, 4 and 7, with a porous shroud 310, as illustrated in Figure 13. In designing the porosity of the shroud 310, there are two considerations. First, the porous shroud 310 must be open enough to permit the free flow of particulates migrating radially outward so that they may reach the discard removing channels and be removed from the filter device 20; second, the porous shroud 310 must be closed enough to minimise to the extent physically possible the secondary flow swirl 220 illustrated in Figure 12.

There are several other design considerations dictating the form of the porous shroud 310. The strength of the shroud material must be strong enough to withstand the high centrifugal force imposed at the tips of the driving blades 320. Also, the shroud 310 must be highly resistant to clogging caused by particle collection diminishing the porosity of the shroud 310.

Several possible methods of making such a porous shroud 310 including making the shroud from a metallic wire mesh or other filamentary material such as glass fibres, or plastics. The shroud 310 can be made by forming tiny perforations in sheet stock made of metal or some other material. A highly controllable method of fabricating a porous shroud 310 is to wind a high strength wire tightly around the driving blades 320 at a preselected pitch or helix angle to achieve the desired porosity. Such a method has the advantage of prestressing the shroud material so that it will not expand during rotation and migrate axially off the driving blades 320.

Such a porous shroud 310 is illustrated in Figure 13, and in the magnified sectional view of Figure 13A. The porosity of the shroud 310 shown is 14.2% which, by way of example, may be achieved by making the shroud 310 from 156 turns of 0.838 mm (0.033 inch) diameter wire wound around a rotor 22 with a 152.4 mm (6 inch) portion of the driving plates 320 being wrapped (1.023 turns/mm or 26 turns/inch). Such a design will effectively reduce secondary flow velocities and will increase the efficiency of the filter device 20 in removing particulates between 10 $\mu$m and 2 $\mu$m from the airstream travelling through the filter device 20, although effective porosity may vary from 5—30%.

Thus, it can be seen that the present invention will filter both large and small particles from an airstream without requiring cleaning, repair or replacement of a filter element. The above description of the preferred embodiments of the present invention is not intended to limit the scope of the invention in any way, for example, the present invention may be used to remove particles and heavies from a liquid flowing through the device, the characteristics of the invention allowing for greater efficiency in the removal of small particles than that of a centrifuge. The filter devices disclosed are of a minimal size, weight, and cost, particularly when compared to pre-existing devices described above. The devices are entirely self-contained, and are easy to manufacture as bolt-on units.

Such design capabilities enable the filter devices described herein to be utilized in removing dust from an intake system of an engine, in removing dust from air to be supplied to the crew of a sealed vehicle, in removing lead particles from exhaust of a gasoline engine, and in removing carbon particles from the exhaust of a diesel engine. The devices thereby present highly improved performance over the pre-existing art without presenting any of the disadvantages of that art.

It will be understood that many cross-combinations of the features shown in the various illustrated embodiments are possible. Thus, the feature of the progressively-increasing driving blade diameter shown in Figure 7 could be incorporated in the motor-driven device of Figure 1 having a radial-outflow inducer blade geometry, and likewise in the axial-flow turbine-driven device of Figures 4 to 6. A radial-outflow or mixed-flow inducer blade configuration could be incorporated in a turbine-driven device such as that of Figures 4 to 6, and the device of Figure 7 could be modified to an axial-flow inducer blade configuration. Other possible cross-combinations of the features of the various illustrated embodiments will be apparent to the person skilled in the art.

**Claims**

1. A filter device (20, 120) for removing particles from a fluid medium, which comprises a housing (24, 122, 182, 234) having an inlet end (40, 132, 184, 242) affording a fluid inlet and an outlet end (50, 140, 252) affording a fluid outlet, a rotationally-driven rotor (22, 124, 190, 232, 300) mounted in the housing and defining an annular-section space between the body (34, 144, 180, 232) of the rotor and the circumferential wall of the housing, along which space a fluid stream to be filtered flows in use in the axial direction from the inlet to the outlet, and means for driving the rotor at high speed around the body of the rotor in the annular-section space so as to subject particles in the fluid stream to centrifugal acceleration causing them to migrate to the outer portion of the space immediately adjacent to the circumferential wall of the housing, and in which the housing is provided with means (100, 102, 104, 110, 160, 162, 164, 200, 210) for removing the migrated particles from the said outer portion of the annular-section space to a location outside the housing; characterised by a porous shroud means (310) which surrounds, and is carried by, the rotor (300) in close proximity to the housing wall within the annular-section space for minimising secondary flow swirl in said space without preventing migration of the particles to an excessive extent.

2. A filter device as claimed in Claim 1 in which the removing means comprise at least two axially-spaced grooves (100, etc.) formed in the internal surface of the circumferential wall of the housing (24, etc.).

3. A filter device as claimed in Claim 1 or Claim 2 in which the rotor (22, 124, 190, 320) carries a set of driving blades (32, 126, 174) extending in the direction of its axial length and projecting outwardly within the annular-section space, and in which the porous shroud means (310) surrounds the radially-outer edges of the driving blades (320).

4. A filter device as claimed in any one of Claims 1 to 3, in which the porous shroud means (310) comprises a winding of a plurality of axially-spaced turns of wire.

5. A filter device as claimed in Claim 4, in which the relationship between the diameter of the wire and the distance between each successive turn of wire is such that the porosity of the shroud means is between 5% and 30%.

6. A filter device as claimed in Claim 4 or 5 in which the wire winding (310) is wrapped around the axially-extending radially-outer edges of the driving blades (320).

7. A filter device as claimed in Claim 6 in which the wire winding (310) is pre-stressed around the driving blades.

8. A filter device as claimed in any of Claims 1 to 3, in which the porous shroud means is a mesh having a preselected porosity.

9. A filter device as claimed in Claim 3 and Claim 8 in which the mesh is wrapped around the axially-extending radially-outer edges of the driving blades (320).

10. A filter device as claimed in any of Claims 1 to 3 in which the porous shroud means is made of perforated sheet metal.

11. A filter device as claimed in any preceding Claim in which the porous shroud means (310) is utilised to minimise the break up of large particles into smaller particles.

12. A filter device as claimed in any preceding Claim in which the driving blades (32, 126, 174) extend longitudinally parallel to the rotor axis with their width projecting radially.

13. A filter device as claimed in any preceding Claim in which the portion of the interior of the housing (24, 122) adjacent to the driving blades is cylindrical and in which the tips of the driving blades (32, 126) are of uniform radius along the lengths of the blades.

14. A filter device as claimed in any one of Claims 1—12 in which the portion of the interior of the housing (182) adjacent to the driving blades is of progressively-increasing diameter along its length in the direction from its inlet end towards its outlet end, and in which the radially-outer edges of the driving blades (174) are of correspondingly-increasing radius along the lengths of the blades so that the said blade edges lie at a constant distance from the housing wall along the lengths of the blades.

**Patentansprüche**

1. Filtervorrichtung (20, 120) zum Entfernen von Partikeln aus einem Fluidmedium, mit einem Gehäuse (24, 122, 182, 234) mit einem Einlaßende (40, 132, 184, 242), das einen Fluideinlaß bildet, und mit einem Auslaßende (50, 140, 252), das einen Fluidauslaß bildet, einem rotierend angetriebene Rotor (22, 124, 190, 232, 300), der in dem Gehäuse befestigt ist und der einen im Querschnitt ringförmigen Raum zwischen dem Körper (34, 144, 180, 232) des Rotors und der Umfangswand des Gehäuses festlegt, längs welchem Raum ein zu filternder Fluidstrom im Betrieb in axialer Richtung vom Einlaß zum Auslaß fließt, und mit einer Vor-

15 **0 122 795** 16

richtung zum Antrieb des Rotors mit hoher Drehzahl um den Körper des Rotors in dem im Querschnitt ringförmigen Raum, so daß Partikel im Fluidstrom einer Zentrifugalbeschleunigung unterzogen werden, die bewirkt, daß die Partikel zum äußeren Teil des Raumes unmittelbar in der Nähe der Umfangswand des Gehäuses wandern, und bei dem das Gehäuse mit einer Vorrichtung (100, 102, 104, 110, 160, 162, 164, 200, 210) zum Abscheiden der wandernden Partikel von dem äußeren Teil des im Querschnitt ringförmigen Raumes an eine Stelle außerhalb des Gehäuses vorgesehen ist, gekennzeichnet durch eine poröse Ummantelung (310), die den Rotor (300) in unmittelbarer Nähe der Gehäusewand innerhalb des im Querschnitt ringförmigen Raumes umgibt und von ihm aufgenommen ist, um den Sekundärflußwirbel in dem Raum möglichst gering zu halten, ohne daß eine Wanderung der Partikel in erheblichem Maße verhindert wird.

2. Filtervorrichtung nach Anspruch 1, bei der die Abscheidungsvorrichtung mindestens zwei in axialer Richtung versetzte Nuten (100, etc.) aufweist, die in der Innenfläche der Umfangswand des Gehäuses (24, etc.) aufgebildet sind.

3. Filtervorrichtung nach Anspruch 1 oder 2, bei dem der Rotor (22, 124, 190, 320) einen Satz von Antriebsschaufeln (32, 126, 174) aufnimmt, die in Richtung seiner axialen Länge verlaufen und nach außen innerhalb des im Querschnitt ringförmigen Raumes vorstehen, und bei dem die Poröse Ummantelung (310) die radial äußeren Ränder der Antriebsschaufeln (320) umgibt.

4. Filtervorrichtung nach einem der Ansprüche 1—3, bei dem die poröse Ummantelung (310) eine Wicklung einer Vielzahl von in axialer Richtung versetzten Drahtwindungen aufweist.

5. Filtervorrichtung nach Anspruch 4, bei der die Beziehung zwischen dem Drahtdurchmesser und dem Abstand zwischen jeder nachfolgenden Drahtwindung so gewählt, ist, daß die Durchlässigkeit der Ummantelung zwischen 5% und 30% beträgt.

6. Filtervorrichtung nach Anspruch 4 oder 5, bei der die Drahtwicklung (310) um die in axialer Richtung verlaufenden, radial äußeren Ränder der Antriebsschaufeln (320) gewickelt ist.

7. Filtervorrichtung nach Anspruch 6, bei der die Drahtwicklung (310) um die Antriebsschaufeln vorgespannt ist.

8. Filtervorrichtung nach einem der Ansprüche 1—3, bei der die durchlässige Ummantelung ein Geflecht mit vorgegebener Durchlässigkeit ist.

9. Filtervorrichtung nach Anspruch 3 und Anspruch 8, bei der das Geflecht um die in axialer Richtung verlaufenden, in radialer Richtung äußeren Kanten der Antriebsschaufeln (320) gewickelt ist.

10. Filtervorrichtung nach einem der Ansprüche 1—3, bei der die poröse Ummantelung aus perforiertem Blech besteht.

11. Filtervorrichtung nach einem der vorausgehenden Ansprüche, bei der die poröse Ummantelung (310) dazu verwendet wird, das Aufbrechen großer Partikel in kleinere Partikel so gering wie möglich zu halten.

12. Filtervorrichtung nach einem der vorausgehenden Ansprüche, bei dem die Antriebsschaufeln (32, 126, 174) sich in Längsrichtung parallel zur Rotorachse erstrecken, wobei ihre Breitenabmessungen in radialer Richtung vorstehen.

13. Filtervorrichtung nach einem der vorausgehenden Ansprüche, bei der der Teil des Inneren des Gehäuses (24, 122) in der Nähe der Antriebsschaufeln zylindrisch ausgebildet ist und bei der die Spitzen der Antriebsschaufeln (32, 126) einen gleichmäßigen Radius in Richtung der Längserstreckungen der Schaufeln haben.

14. Filtervorrichtung nach einem der Ansprüche 1—12, bei der der Teil des Inneren des Gehäuses (182) in der Nähe der Antriebsschaufeln einen zunehmend größeren Durchmesser in seiner Länge in Richtung vom Einlaßende zum Auslaßende hat, und bei der die radial äußeren Kanten der Antriebsschaufeln (174) einen entsprechend zunehmenden Radius in den Längenabmessungen der Schaufeln haben, so daß die Schaufelkanten in einem Konstanten Abstand von der Gehäusewand und längs der Längenabmessungen der Schaufeln liegen.

**Revendications**

1. Dispositif de filetage (20, 120) pour séparer des particules d'un milieu fluide, qui comprend un carter (24, 122, 182, 234) comportant une extrémité d'entrée (40, 132, 184, 242) qui permet une entrée de fluide et une extrémité de sortie (50, 140, 252) qui permet une sortie de fluide, un rotor entraîné en rotation (22, 124, 190, 232, 300) monté dans le carter et définissant un espace de section annulaire entre le corps (34, 144, 180, 232) du rotor et la paroi circonférentielle du carter, un flux de fluide à filtrer circulant pendant l'utilisation le long de cet espace dans la direction axiale de l'entrée à la sortie, et des moyens d'entraînement du rotor à grande vitesse autour du corps du rotor dans l'espace de section annulaire, de façon à soumettre les particules contenues dans le flux de fluide à une accélération centrifuge qui provoque leur migration vers la partie extérieure de l'espace immédiatement adjacente à la paroi circonférentielle du carter, et dans lequel le carter comporte des moyens (100, 102, 104, 110, 160, 162, 164, 200, 210) pour évacuer les particules ainsi déplacées, de ladite partie extérieure de l'espace à section annulaire jusqu'à un endroit extérieur au carter; caractérisé par des moyens de gainage poreux (310) qui entourent le rotor (300) et sont portés par celui-ci à faible distance de la paroi du carter, dans l'espace à section annulaire, pour minimiser les tourbillons de circulation secondaire dans ledit espace sans empêcher à un degré excessif la migration des particules.

9

2. Dispositif de filtrage suivant la revendication 1, dans lequel les moyens d'évacuation comprennent au moins deux gorges axialement espacées (100, etc.) ménagées dans la surface intérieure de la paroi circonférentielle du carter (24, etc.).

3. Dispositif de filtrage suivant la revendication 1 ou la revendication 2, dans lequel le rotor (22, 124, 190, 320) porte un ensemble d'aubages d'entraînement (32, 126, 174) s'étendant dans la direction de sa longueur axiale et en saillie, vers l'extérieur dans l'espace de section annulaire, et dans lequel les moyens de gainage poreux (310) entourent les bords radialement extérieurs des aubages d'entraînement (320).

4. Dispositif de filtrage suivant l'une quelconque des revendications 1 à 3, dans lequel les moyens de gainage poreux (310) comprennent un enroulement d'une pluralité de spires de fil axialement espacées.

5. Dispositif de filtrage suivant la revendication 4, dans lequel la relation entre le diamètre du fil et la distance entre chaque spire de fil successive est telle que la porosité des moyens de gainage est comprise entre 5 % et 30 %.

6. Dispositif de filtrage suivant la revendication 4 ou 5, dans lequel l'enroulement de fil (310) est enroulé autour des bords radialement extérieurs et s'étendant axialement des aubages d'entraînement (320).

7. Dispositif de filtrage suivant la revendication 6, dans lequel l'enroulement de fil (310) est précontraint autour des aubages d'entraînement.

8. Dispositif de filtrage suivant l'une quelconque des revendications 1 à 3, dans lequel les moyens de gainage poreux comprennent un grillage d'une porosité prédéterminée.

9. Dispositif de filtrage suivant la revendication 3 et la revendication 8, dans lequel le grillage est enroulé autour des bords radialement extérieurs et s'étendant axialement des aubages d'entraînement (320).

10. Dispositif de filtrage suivant l'une quelconque des revendications 1 à 3, dans lequel les moyens de gainage poreux sont constitués d'une tôle métallique perforée.

11. Dispositif de filtrage suivant l'une quelconque des revendications précédentes, dans lequel les moyens de gainage poreux (310) sont utilisés pour minimiser la désagrégation des grosses particules en particules plus petites.

12. Dispositif de filtrage suivant l'une quelconque des revendications précédentes, dans lequel les aubages d'entraînement (32, 126, 174) s'étendent longitudinalement, parallèlement à l'axe du rotor, leurs largeurs étant dirigées radialement.

13. Dispositif de filtrage suivant l'une quelconque des revendications précédentes, dans lequel la partie de l'intérieur du carter (24, 122) adjacente aux aubages d'entraînement est cylindrique, et dans lequel les bords des aubages d'entraînement (32, 126) ont un rayon constant sur toute la longueur des aubages.

14. Dispositif de filtrage suivant l'une quelconque des revendications 1 à 12, dans lequel la partie de l'intérieur du carter (182) adjacente aux aubages d'entraînement est de diamètre progressivement croissant sur sa longueur, dans la direction de son extrémité d'entrée vers son extrémité de sortie, et dans lequel les bords radialement extérieurs des aubages d'entraînement (174) ont un rayon croissant de façon correspondante sur les longueurs des aubages, de sorte que lesdits bords des aubages se trouvent à une distance constante de la paroi du carter sur toute la longueur des aubages.

Fig. 1.

Fig. 2.

Fig. 3.

Fig. 4.

126

124

136

Fig. 5.

144

130

130

124

Fig. 6.

174   182   190

184

172

176

170

180

Fig. 7.

3

Fig. 8.

Fig. 11.

Fig. 9.

24
200
112
32
24
22

Fig. 10.

24
110
210
32
212
22
24

Fig. 12.

Fig. 13.

Fig. 13A